# EUROPEAN PATENT SPECIFICATION

(11) **EP 1 956 750 B1**
(45) Date of publication and mention of the grant of the patent: **10.11.2010**
(21) Application number: 06817944.9
(22) Date of filing: 04.12.2006
(51) Int. Cl.: H04L 12/24

(54) **A METHOD FOR REALIZING THE SEPARATE ROUTES SPANNING DOMAINS**
VERFAHREN ZUM REALISIEREN DER SEPARATE ROUTEN ÜBERSPANNENDEN DOMÄNEN
PROCEDE POUR LA REALISATION D'ACHEMINEMENTS SEPARES RELIANT DES DOMAINES

(30) Priority: 02.12.2005 CN 200510102134
(43) Date of publication of application: 13.08.2008
(73) Proprietor: Huawei Technologies Co., Ltd., Longgang District, Shenzhen Guangdong 518129 (CN)
(72) Inventor: XU, Huiying, Guangdong 518129 (CN)
(74) Representative: Hengelhaupt, Jürgen
(86) International application number: PCT/CN2006/003267
(87) International publication number: WO 2007/062608

(56) References cited:
- WO-A1-2004/077759
- CN-A- 1 362 806
- CN-A- 1 505 409
- CN-A- 1 592 249
- US-A1- 2005 259 664
- DÄACHILLE ED (CORITEL) M LISTANTI (CORITEL) U MONACO ED (CORITEL) F RICCIATO (CORITEL) D ALI (CORITEL) V SHARMA (METANOIA A ET AL: "Diverse Inter-Region Path Setup/Establishment; draft-dachille-diverse-inter-region-path-s etup-01.txt" IETF STANDARD-WORKING-DRAFT, INTERNET ENGINEERING TASK FORCE, IETF, CH, no. 1, 1 October 2004 (2004-10-01), XP015037736 ISSN: 0000-0004
- ALI D ET AL: "Distributed schemes for diverse path computation in multidomain MPLS networks" IEEE COMMUNICATIONS MAGAZINE, IEEE SERVICE CENTER, PISCATAWAY, US, vol. 43, no. 6, 1 June 2005 (2005-06-01), pages 138-146, XP011134827 ISSN: 0163-6804

## Description

This application claims the benefit of CN Publication No. 1859170 filed on December 2, 2005, titled "METHOD FOR IMPLEMENTING CROSS-DOMAIN ROUTING SEPARATION".

### Field of the Invention

The present invention relates to the technical field of network communications, and in particular, to a method for implementing a cross-domain connection routing separation based on a call.

### Background of the Invention

Traditional optical network service is scheduled in the manner of network management static configuration, and the dynamic activation is not supported. The traditional optical network mostly employs linear networking and ring networking, and employs the multiplex section protection and the Sub-Network connection protection (SNCP) as the protection and recovery mechanism. These two protection methods belong to a static recovery method. With the rapid development of data service and dedicated line service, the requirement for the network bandwidth increases greatly, and the demand for the dynamic allocation of the network bandwidth becomes more and more urgent. Therefore, the data service and dedicated line service require the network to provide dynamic activation ability and support the structure of a mesh network. Thus, the network has the ability of flexible expansion and the function of rapid protection and recovery. Automatically Switched Optical Network (ASON) solves the above problem. ASON employs Generalized MultiProtocol Label Switching (GMPLS) protocol on the control plane to provide two kinds of connections, i.e. Switch Connection (SC) and Soft Permanent Connection (SPC), and ASON is a key technology in the development of optical network. At present, International Telecommunication Unite-T sector (ITU-T) has basically completed the definition for the architecture and requirement of ASON. Internet Engineering Task Force (IETF) has completed the signaling, automatic routing finding, routing protocol expanding and defining in a single domain, and the architecture in a multidomain, and a rough first draft has been proposed with respect to the above contents.

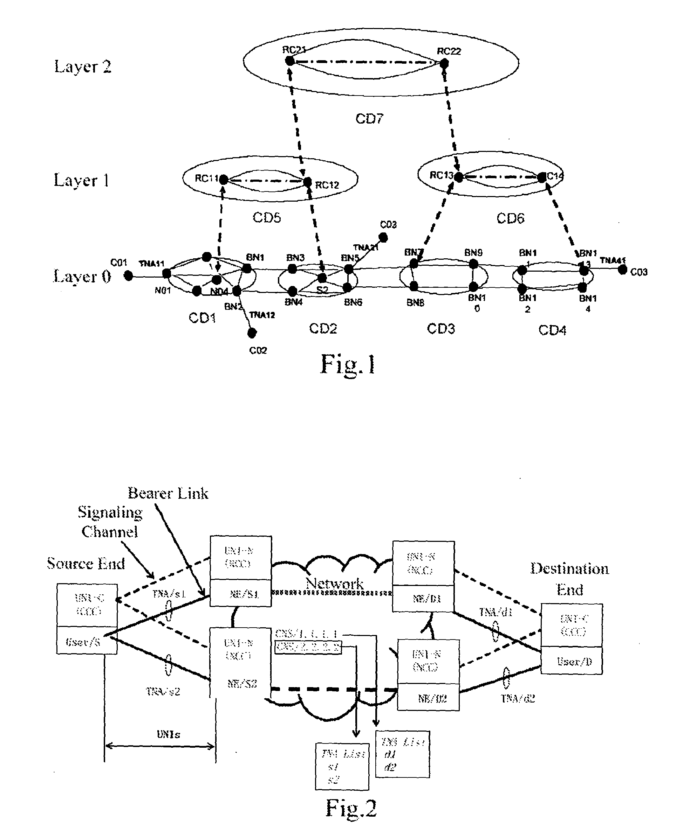

With the development of ASON, the control plane needs to solve the problem of large-scale network management. At present, ITU-T and Optical Internetworking Forum (OIF) both employ a hierarchical network model and use an agent node on the upper layer to represent a control domain on the lower layer. The agent node may issue an abstract topology, an inter-domain link, or an accessible address to represent the domain, thus the hierarchical network may be formed upwardly layer by layer. Figure 1 shows a hierarchical network model. In the hierarchical network shown in Figure 1, Layer 0, Layer 1 and Layer 2 jointly show a hierarchy relation of the multidomain network. The network of each layer includes at least one control domain, and each control domain is abstracted as a node, thus the whole network becomes a 3-layer network topology. Because no node in each control domain can obtain the topology information of the whole network, the service requesting node cannot compute a complete routing for an end-to-end separation.

In the prior art, the following solutions are provided in the single domain and the multidomain to solve the above problems, respectively.

In the case of single domain, if an SC service connection supports a dual-homed bastion host, a first connection routing is established first, and the information related to the connection routing is recorded, and then Explicit Routing Object (ERO) of the first connection routing is carried via signaling. Thus, the links or nodes passed by the first connection routing are excluded during computation, and a second connection routing is established. Figure 2 is a schematic diagram of the dual-homed bastion host method in UNI2.0 of the prior art. Source C end (User/S) initiates a request to S1 for establishing a connection to destination C end (User/D). When the establishment is completed, the ERO of S1->D1 is recorded and delivered to source C end. Source C end carries the ERO of S1->D1 and initiates a request to S2 for establishing a connection to destination C end. Thus, when S2 computes the routing, the links passed by connection S1->D1 are excluded. In other words, the routing separation is implemented.

In the above solution, the inventor notes that: a plurality of connections passing the intra-domain is computed in turn, and thus the problem that the separated connection cannot be established successfully when resources exist occurs. Moreover, this solution cannot be expanded to the case of multidomain.

At present, in the solution for computing Traffic Engineering (TE) routing in the multidomain, IETF are drawing up requirements and solutions with respect to Path Computation Element (PCE). Specifically, a centralized computation is employed, and when each node receives a connection request, the node queries the routing to the PCE, and the PCE returns routing information to the requester. PCE may be used in the single domain and may also be used in the multidomain.

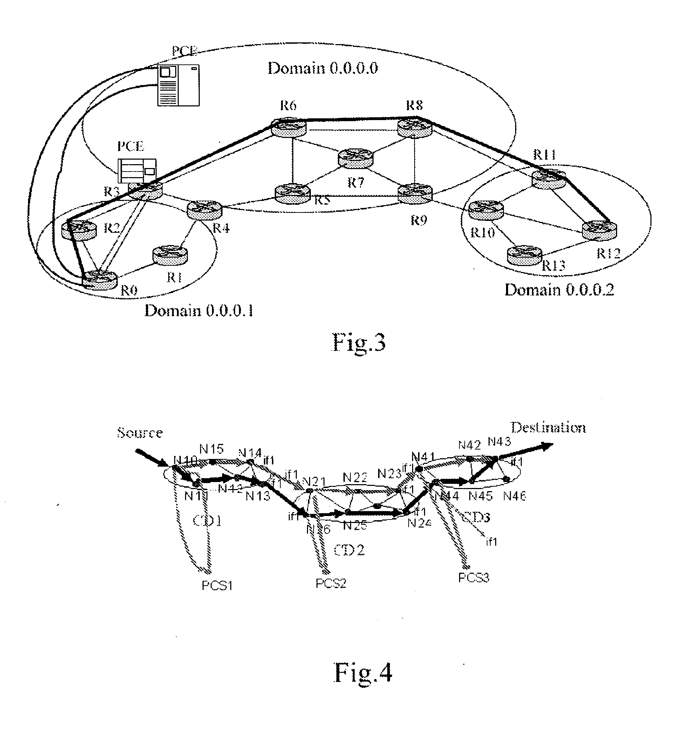

Figure 3 is a schematic diagram showing the PCE routing computation solution of the prior art. When a network management or client end device sends a request to R0 for establishing a connection from R0 to R12, R0 requests the routing computation from an upper PCE, and the upper PCE returns an inter-domain routing (R0-R2-R3-R6-R8-R11-R12). The ingress node of domains R0, R2, R3, R6, R8, R11 and R12 needs to request the routing computation from PCE, so as to obtain the intra-domain routing. Thus, the routing connection in the multidomain may be established in conjunction with the original inter-domain routing. The inventor also notes that: 1) in PCE, only routing computation method is given, but in the case of the multidomain, because the ingress node of each control domain cannot obtain the topology information of the whole network, the service requesting node cannot compute the complete routing of N (N≥2) cross-domain end-to-end separations. In the existing PCE technology, when a cross-domain routing connection is established, the inter-domain routing is usually first computed on the PCE node, and then the intra-domain routing is computed on the ingress node of each domain. When a plurality of service connections based on one call pass a domain, because the ingress node may be different, the routing information of other connections cannot be obtained, and other used links cannot be excluded, thus the connection routing separation cannot be implemented.

2) The PCE solution is in the mode of the centralized computation, and the computation of the inter-domain routing and the computation of the intra-domain routing are both accomplished on the PCE node. As a result, the load of the PCE node is very heavy, and a lot of time is spent on the routing computation during the routing establishment process, thus the speed of the routing establishment is slowed down seriously.
"Diverse Inter-Region Path Setup / Establishment; draft-dachille-diverse-inter-region-path-setup-01.txt" (IETF STANDARDWORKING-DRAFT, INTERNET ENGINEERING TASK FORCE, IETF, CH, no. 1, 1 October 2004, XP015037736 ISSN: 0000-0004) discloses a mechanism to establish end-to-end diverse or disjoint label switched paths across multiple regions, as required for inter-area and inter-AS traffic engineering;
"Distributed schemes for diverse path computation in multi-domain MPLS networks" (IEEE COMMUNICATIONS MAGAZINE, IEEE SERVICE CENTER, PISCATAWAY, US, vol. 43, no. 6, 1 June 2005, pages 138-146, XP011134827 ISSN: 0163-6804) discloses three alternative schemes recently proposed for inter-domain diverse path computation, and quantitatively assess their performance with simulations over real ISP topologies.

### Summary of the Invention

Embodiments of the invention provide a method for implementing a cross-domain routing separation, so that a plurality of cross-domain connection routing separations based on a call may be implemented, and the failure correlation may be reduced and the viability of the service may be improved.

One embodiment of the invention provides a method for implementing a cross-domain routing separation so as to establish a connection based on a call between a source node and a sink node, and the method includes:
obtaining, by the source node, information of all inter-domain separation routings, an ingress Sub-Network Point Pool, SNPP, and an egress SNPP of each domain between the source node and the sink node;
requesting, by an ingress node of each domain between the source node and the sink node, a Path Computations Server, PCS, in a domain where the ingress node exists to compute intra-domain separation routings based on the call, on the ingress SNPP and on the egress SNPP, and storing information of the intra-domain separation routings;
delivering, by the ingress node, the information of all the inter-domain separation routings, the ingress SNPP and the egress SNPP between the source node and the sink node to an egress node of the domain along one of the intra-domain separation routings computed by the PCS,
delivering, by the egress node, the information of all the inter-domain separation routings, the ingress SNPP and the egress SNPP between the source node and the sink node to an ingress node of the next domain along one of the inter-domain separation routings; and
obtaining different routings between the source node and the sink node to establish the connection based on the call, according to the information of all the inter-domain separation routings and the information of the intra-domain separation routings.

In specific embodiments of the invention, the inter-domain routing computation requested by the source node can guarantee the inter-domain routing separation, and the computation of the local PCS requested by the ingress node in each domain can guarantee the intra-domain routing separation, thus the cross-domain routing separation is implemented

Therefore, by computing N (N≥2) cross-domain connection routing separations in a call according to the method of the invention, N single domain or cross-domain separation routing connections can be established. In the case of dynamic routing change, for example, when any one of the N connections is rerouted, optimized and so on, the routing separation can still to be guaranteed. When a failure occurs on one connection routing in the call in the network, because the routing separation (link separation or node separation or shared risk link group separation) is performed on all the connections in the call, the failure independence may be implemented and other connections are not influenced. Therefore, in the method of the invention, the correlation of the network connection failures may be reduced, and the viability of the service may be improved. In addition, the method of the invention may be applied to ASON, and may also be applied to MPLS-TE network.

### Brief Description of the Drawings

The drawings are provided for further illustrating the embodiments of the invention, and the drawings constitute a part of this application without limiting the scope of the invention. In the drawings:

Figure 1 is a diagram showing a hierarchical network model of the prior art;

Figure 2 is a schematic diagram of the dual-homed bastion host method in UNI2.0 of the prior art;

Figure 3 is a schematic diagram showing the PCE routing computation solution of the prior art;

Figure 4 is a schematic diagram showing a cross-domain separation routing connection according to one embodiment of the invention; and

Figure 5 is a main flow chart of the process for establishing a cross-domain separation routing connection according to one embodiment of the invention.

### Detailed Description of the Embodiments

The solutions of the invention are now illustrated in detail in conjunction with the drawings and embodiments of the invention. Here, the embodiments of the invention are merely used to describe the invention, without constituting a limitation to the invention.

At present, in the hierarchical model network employed by ITU-T and OIF, an agent node on the upper layer is used to represent a control domain on the lower layer. The agent node may issue abstract topology, inter-domain link, and accessible address to represent the control domain. The network of each layer includes at least one control domain, and each control domain is abstracted as a node, and therefore the whole network becomes a multi-hierarchy network topology. An independent PCS is configured in each control domain in the network of each layer, and is dedicated to processing the routing computation request in the control domain. The PCS may be a node of the control domain, or may also be a node outside the control domain, such as a network management computer or an independent computation server. When an ingress node of a control domain requests a routing computation from a PCS of the control domain, the PCS computes an intra-domain separation routing collection of all connections in the call according to the ingress Sub-Network Point Pool (SNPP), egress Subnetwork Point Pool (SNPP) and call request information provided by the ingress node of the control domain. Except for the source node and sink node, any two connections in the collection are separated (link separation or node separation or shared risk link group separation).

In order to guarantee the intra-domain separation routing, PCS may employ Constraint Shortest Path First (CSPF) or other disclosed algorithms for computing N separation routings at one time. If CSPF algorithm is employed to compute the shortest path from the ingress node to the egress node, i.e. the shortest path from the source node to the destination node, two collections related to CSPF algorithm, i.e. path tree collection and potential next hop collection, are initialized as empty first.

a) The source node is put into the potential next hop collection.

b) Node A is selected from the potential next hop collection and put into the path tree, so that the path weight value from the source node to the node A is minimized (the path weight value may be computed according to distance and bandwidth as defined by the user). If the potential next hop collection is empty, the computation fails and the computation ends. If the node selected is the destination node, the computation is successful and the shortest path in the path tree collection is found, and then ends the computation process; otherwise, turns to step c.

c) For all the nodes connected with node A, it is checked whether the nodes can be put into the potential next hop collection. If a node is neither in the path tree nor in the potential next hop collection, the node is put into the potential next hop collection. If a node is already in the path tree collection, no operation is performed on the node. If a node is already in the potential next hop collection, there is a need to compare the weight value of a new path to the node and that of the path to the node in the potential next hop collection. If the weight value of the new path is less than that of the path in the potential next hop collection, the path in the potential next hop collection is deleted and the new path is saved into the potential next hop collection. If the path weight value of the path in the potential next hop collection is less than that of the new path, no operation is performed. After checking the nodes connected with node A, turns to step b.

According to one embodiment of the invention, when the source node initiates a cross-domain separation routing connection request on the basis of a call to the sink node, the source node requests a routing computation from the node where the network topology information exists, and obtains the ingress SNPP, egress SNPP and inter-domain routing information of each domain. The PCS of each domain computes the intra-domain separation routings of all the connections in the call according to the ingress SNPP, egress SNPP and the call ID and connection ID of the current connection. The call ID may be represented with the call ID object type defined by ITU-T or other expanded types. The connection ID may be represented with the source and sink transfer network resource address, connection name and instance number, source and sink end node name instance number, or connection name. The connection ID uniquely corresponds to one end-to-end connection in a call.

Because the inter-domain routing computation may guarantee the inter-domain routing separation and the computation of the local PCS may guarantee the intra-domain routing separation, the cross-domain connection routing separation may be implemented as follows.

Step 1: The network management or client end device initiates a cross-domain separation routing connection request based on a call from the source node to the sink node.

Step 2: The service source node requests the inter-domain routing computation from the node where the network topology information exists, and obtains and saves the inter-domain separation routing information.

If the topology information delivered from the upper layer network is stored on the source node, the source node directly performs the inter-domain routing computation, and obtains the inter-domain separation routing, the ingress SNPP and the egress SNPP of each domain.

If no topology information of the upper layer network is stored on the source node, the source node requests the inter-domain routing computation from the Domain to Domain Routing Protocol (DDRP) node of the top layer of the link, and obtains the inter-domain separation routing and the ingress SNPP and egress SNPP of each domain.

Either of the inter-domain routing computation accomplished by the source node locally and inter-domain routing computation accomplished by the DDRP node of the top layer of the link, can guarantee that the connection routing between different domains is separated from each other.

Step 3: The service source node establishes a first cross-domain routing.

The ingress node of each control domain between the source and sink nodes requests the routing computation from the PCS of the control domain according to the ingress SNPP, egress SNPP of the control domain, and the obtained call ID and connection ID of the call. The PCS returns the routing computation result to the ingress node of the control domain according to the routing request. For N connections in the call, the computation policy of the PCS may employ any of the following two modes. Both modes can guarantee that the intra-domain routing of the connections in the call is separated from each other.

Mode 1: When a plurality of connections based on the call passes the control domain, the PCS computes the routings of all intra-domain connections in the call in one time. The ingress node of each control domain carries all the ingress SNPP, egress SNPP and the call ID and connection ID of current call, and sends the ingress SNPP, egress SNPP and the call ID and connection ID of the call to the PCS in one time. The PCS computes and obtains the routings of all the connections passing the control domain in one time, guarantees the routing separation (link separation or node separation or shared risk link group separation), saves the computed routings, call ID and connection ID of each intra-domain connection, and establishes a query index for the computation result according to the call ID and connection ID, and then returns the computation result to the ingress node.

Mode 2: When a plurality of connections based on the call passes the control same domain, the PCS computes the intra-domain connection routing requested by current connection. The ingress node of each control domain carries the ingress SNPP, egress SNPP of the control domain and the call ID and connection ID of current call, and sends the ingress SNPP, egress SNPP of the control domain and the call ID and connection ID of current call to the PCS. The PCS computes one current separation routing, saves the computation result and current call ID and connection ID, and establishes a query index for the computation result according to the call ID and connection ID, and then returns the result to the ingress node.

The service source node establishes the first cross-domain routing as follows.

S301: The service source node selects an inter-domain routing.

S302: The source node requests the intra-domain routing computation from the PCS of current domain, and establishes an intra-domain routing connection.

S303: If the topology information delivered by the upper layer network is stored on the source node, the source node directly performs the inter-domain routing computation. If no topology information of the upper layer network is stored on the source node, the source node requests the inter-domain routing computation from the DDRP node of the top layer of the link, obtains all inter-domain separation routings and the ingress SNPP and the egress SNPP of each domain, and delivers the inter-domain separation routings and the ingress SNPP and the egress SNPP of each domain to the egress node of the control domain where the source node exists via the intra-domain routing.

S304: The egress node of the control domain where the source node exists establishes a connection to the ingress node of the next control domain according to the inter-domain separation routing information, and delivers the inter-domain separation routing information to the ingress node of the next control domain.

S305: The ingress node of the next control domain requests the intra-domain routing computation from the PCS of the current domain, and establishes the intra-domain routing connection.

S306: The ingress node of S305 carries the inter-domain separation routing information, i.e. the inter-domain separation routing, ingress SNPP and egress SNPP, and delivers the inter-domain separation routing information to the egress node of the control domain where the ingress node of S305 exists via the intra-domain routing.

S307: The egress node of S306 establishes a connection to the ingress node of the next control domain according to the inter-domain separation routing information, and delivers remaining inter-domain routing information to the ingress node.

S308: Other intra-domain routing connections and inter-domain routing connections may be established similar to S306 and S307, till the last control domain of current connection is reached.

S309: The establishment of the first cross-domain routing is completed.

Step 4: The service source node establishes another cross-domain connection routing. During establishing another routing connection, the ingress node of each domain requests a new connection routing from the PCS of current domain. According to the computation mode of the first cross-domain connection routing, the computation of new current connection routing also has the following two modes.

Mode 1: Because all the separation routings have been obtained by the previous intra-domain routing computation, the ingress node of each control domain only needs to send the call ID and connection ID of current connection to the PCS. The PCS queries the routing computation result saved according to the call ID and connection ID, and excludes the routing resources (connection nodes and links) which have been used, thus the new intra-domain connection routing may be obtained. Then, the PCS returns the query result to the ingress node. Subsequently, the new intra-domain routing connection and the call ID and connection ID of the call are saved on the PCS.

Mode 2: Because only one separation routing is computed in the previous intra-domain routing computation, when the ingress node of each control domain requests the intra-domain routing computation from the PCS, the dynamic computation must be carried out because the PCS has no computation results for query. The ingress node of each control domain sends the ingress SNPP, egress SNPP and the call ID and connection ID of the domain passed by current connection to the PCS. The PCS finds the existing connection in the current call according to the call name, excludes the routing resources (connection nodes and links) which have been used by the connection, computes a new intra-domain connection routing which is separated from the existing connection routing and returns the new intra-domain connection routing to the ingress node. Subsequently, the new intra-domain routing connection and the call ID and connection ID of the current call are saved on the PCS.

The service source node establishes another cross-domain connection routing as follows.

S401: The service source node selects an inter-domain routing according to all the inter-domain separation routing information stored.

S402: The source node requests the routing computation from the PCS of the current domain, and establishes a new intra-domain routing connection.

S403: The source node carries all the inter-domain routing information returned by the upper layer DDPR node, i.e. all the inter-domain separation routings and SNPP pairs, and delivers the inter-domain routing information to the egress node of the control domain where the source node exists via the intra-domain routing.

S404: The egress node of the control domain where the source node exists excludes the inter-domain routing resources which have been used according to the inter-domain routing information, establishes a new inter-domain routing connection to the ingress node of the next control domain, and delivers the remaining inter-domain routing information to the ingress node of the next control domain.

S405: The ingress node of the next control domain requests the routing computation from the PCS of the next control domain, and establishes an intra-domain routing connection.

S406: The ingress node of S405 carries the inter-domain routing information, i.e. the inter-domain separation routing, ingress SNPP and egress SNPP, and delivers the inter-domain routing information to the egress node of the domain where the ingress node of S405 exists via the intra-domain routing.

S407: The egress node of S406 establishes a connection with the next domain according to the inter-domain routing information, and delivers the remaining inter-domain routing information to the ingress node of the next domain.

S408: Other intra-domain routing connections and inter-domain routing connections may be established similar to S406 and S407, till the last domain of the current connection is reached.

S409: Another cross-domain connection routing is established, so that the cross-domain routing separation may be implemented.

Thus, the service source node completes the establishment of the separation routing connection service, i.e. the cross-domain connection routing separation between the source node and the sink node. When any of the routing connections needs to be rerouted or when the dynamic routing change occurs, the operation same as that in Step 4 is performed. When a failure occurs on one connection routing in the call in the network, because no overlapped path exists in the connection routings in the call, other routings are not influenced. Therefore, in the present method, the correlation of network routing failures may be reduced, and the viability of the service may be improved. The method of the invention may be applied to ASON, and may also be applied to MPLS-TE network.

In order to better understand the invention, the method for implementing the connection routing separation according to the invention is now described in detail in conjunction with the specific embodiments.

One embodiment of the invention is as shown in Figure 4. Figure 4 is a schematic diagram of the cross-domain separation routing connection according to one embodiment of the invention. The whole network is divided into three control domains: CD1, CD2 and CD3. An independent PCS exists in each control domain. Particularly, PCS1, PCS2 and PCS3 pertain to CD1, CD2 and CD3 respectively, responsible for the routing computation of corresponding domain. The PCS may be a node of current domain and may be a node outside the domain, such as a network management computer or an independent computation server. The technical solution includes the following steps.

Step 1: The network management or client end device initiates a request on source node N10 for establishing a 1+1 service to sink node N43, and requests two cross-domain connection routings of the 1+1 service to implement an end-to-end link separation.

Step 2: Because no topology information of the upper layer network exists, source node N10 requests the routing computation from the DDRP node of the top layer of the link. The DDRP node computes and obtains all the inter-domain separation routing information, i.e. all inter-domain separation routings and all ingress SNPP and egress SNPP in three subdomains CD1, CD2 and CD3, and stores the inter-domain separation routing information. The inter-domain routing information obtained by N10 includes the following information.

Inter-Domain Separation Routing:
1: N10->N14->N21->N23->N41->N43;
2: N10->N13->N26->N24->N44->N43.

SNPP Pair of the first Inter-Domain Separation Routing:
[N10, if1]->[N14, if1],
[N21, if1]->[N23, if1],
[N41, if1]->[N43, if1].

SNPP Pair of the Second Inter-Domain Separation Routing:
[N10. if1]->[N13, if1],
[N26, if1]->[N24, if1],
[N44, if1]->[N46, if1].

Step 3: Source node N10 establishes a first routing connection. During the establishment of the routing connection, the ingress node of each domain where CD1, CD2 or CD3 exists requests the routing computation from the PCS of the domain. In other words, N10 of CD1 queried the intra-domain routing from PCS1, N21 (or N26) of CD2 requests the routing computation from PCS2, and N41 (or N44) of CD3 requests the routing computation from PCS3. Specifically, the routing computation may be performed through the following two modes.

Mode 1: When the first connection is established, the ingress node of each domain carries all the ingress SNPP and egress SNPP and the call ID and connection ID in the domain, and sends them to the PCS. The PCS computes all the separation routings at one time, saves the computation result and the call ID and connection ID of current call, and establishes a query index for the computation result according to the call ID and connection ID, and then returns the computation result to the ingress node. Specifically, the process is implemented as follows.

Source node N10 carries the SNPP pairs ([N10, if1]->[N14, if1], [N10, if1 ]->[N13, if1]) and the call ID and connection ID to PCS1 in one time, and PCS1 computes two following separation routings:
N10->N15->N14;
N10->N11->N12->N13.

N21 (or N26) carries the SNPP pairs ( [N21, if2]->[N23, if1], [N26, if1]->[N24, if1]) and the call ID and connection ID to PCS2 in one time, and PCS2 computes two following separation routings:
N21->N22->N23;
N26->N25->N24.

N41 ( or N44) carries the SNPP pairs ([N41, if1]->[N43, if1], [N44, if1]->[N43, if1]) and the call ID and connection ID to PCS3 in one time, and PCS3 computes two separation routings:
N41->N42->N43;
N44->N45->N43.

Mode 2: The ingress node of each domain carries the ingress SNPP, egress SNPP and the call ID and connection ID in the domain, and sends them to the PCS. The PCS computes a current routing, saves the computation result and the call ID and connection ID of the current call, and establishes a query index for the computation result according to the call ID and connection ID, and then returns the computation result to a corresponding ingress node. Specifically, the process is implemented as follows.

N10 carries the SNPP pair ([N10, if1]->[N14, if1]) and the call ID and connection ID to PCS1 in one time, and PCS1 computes a routing: N10->N15->N14.

N21 carries the SNPP pair ( [N21, if2]->[N23, if1]) and the call ID and connection ID to PCS2 in one time, and PCS2 computes a routing: N21->N22->N23.

N41 carries the SNPP pair ([N41, if1]->[N43, if1]) and the call ID and connection ID to PCS3 in one time, and PCS3 computes a routing: N41->N42->N43.

Specifically, the process in which source node N10 establishes the first routing connection includes the following steps.

S501: N10 selects an inter-domain routing, such as:
N10->N14->N21->N23->N41->N43.

S502: N10 requests the routing computation from PCS1, and establishes a routing connection in CD1, such as N10->N15->N14.

S503: N10 carries the inter-domain routing information returned by the DDPR node of the upper layer, i.e. the inter-domain routing and SNPP pair, and delivers the inter-domain routing information to egress node N14 via a routing in CD1.

S504: N14 establishes a connection with the ingress node N21 of CD2 according to the inter-domain routing information, and delivers the inter-domain routing information to N21.

S505: N21 requests the routing computation from PCS2, and establishes a routing connection in CD2, i.e. N21->N22->N23.

S506: N21 carries the inter-domain routing information, i.e. all the inter-domain separation routings and SNPP pairs, and delivers the inter-domain routing information to egress node N23 via a routing in CD2.

S507: N23 establishes a connection with ingress node N41 of CD3 according to the inter-domain routing information, and delivers the inter-domain routing information to N41.

S508: N41 requests the routing computation from PCS3, and establishes a routing connection in CD3, i.e. N41->N42->N43.

S509: The establishment of the first cross-domain routing is completed, and the routing is as follows:
N10->N15->N14->N21->N22->N23->N41->N42->N43.

Step 4: N10 establishes a second routing connection. During the establishment of the routing connection, the ingress node of each domain where CD1, CD2 or CD3 exists requests the routing computation from the PCS of the domain. In other words, N10 of CD1 queries the intra-domain routing from PCS1, N21 (or N26) of CD2 requests the routing computation from PCS2, and N41 (or N44) of CD3 requests the routing computation from PCS3. Similar to the computation mode of the first connection routing, the computation of the current routing may also be performed through the following two modes.

Mode 1: Because in the previous intra-domain routing computation, all the intra-domain connection routings are computed, and a query index is established according to the call ID and connection ID, the ingress node of each domain only needs to send the call ID and connection ID to the PCS. Thus, the PCS may query the new intra-domain routing information in the previous computation result according to the index information, and then return the computation result to corresponding ingress node.

Mode 2: Because in previous intra-domain routing computation, only one connection routing is computed, the ingress node of each control domain needs to send the ingress SNPP, egress SNPP and call ID and connection ID of the control domain passed by current connection to the PCS. The PCS finds the existing connection in the current call according to the call name, excludes the routing resources which have been used by the connection (a link excluded in the link separation, a node excluded in the node separation, and a link which belongs to the shared risk link group excluded in the shared risk link group separation), and computes a new intra-domain connection routing separated from the existing connection routing and returns the new intra-domain connection routing to the ingress node. Subsequently, the new intra-domain routing connection and the call ID and connection ID of the current call are saved on the PCS.

The process in which source node N10 establishes a second routing connection is as follows.

N10 carries the SNPP pair ([N10, if1]->[N14, if1]) and the call ID and connection ID to PCS1 in one time, and excludes the resources used by other connections passing the domain in the call. In this embodiment, link N10->N15->N14 is excluded. PCS1 computes a routing: N10->N11->N12->N13.

N26 carries the SNPP pair ( [N21, if2]->[N23, if1]) and the call ID and connection ID to PCS2 in one time, and PCS2 computes a routing: N26->N25->N24.

N44 carries the SNPP pair ([N41, if1]->[N43, if1]) and the call ID and connection ID to PCS3 in one time, and PCS3 computes a routing: N44->N45->N46.

The specific process is as follows.

S601: N10 selects an inter-domain routing according to all stored inter-domain separation routing information, i.e.
N10->N13->N26->N24->N44->N46.

S602: N10 requests the routing computation from PCS1, and establishes a routing connection in CD1, for example, N10->N12->N13.

S603: N10 carries all the inter-domain routing information returned by the upper layer DDPR node, i.e. all inter-domain separation routings and SNPP pairs, and delivers the inter-domain routing information to egress node N13 via a routing in CD1.

S604: N13 establishes a connection to ingress node N26 in CD2 according to the inter-domain routing information, and delivers the inter-domain routing information to N26.

S605: N26 requests the routing computation from PCS2, and establishes a routing connection in CD2, i.e. N26->N25->N24.

S606: N26 carries the inter-domain routing information, i.e. all inter-domain separation routings and SNPP pairs, and delivers the inter-domain routing information to egress node N24 via a routing in CD3.

S607: N24 establishes a connection with ingress node N44 of CD3 according to the inter-domain routing information, and delivers the inter-domain routing information to N44.

S608: N44 requests the routing computation from PCS3, and establishes a routing connection in CD3, i.e. N44->N45->N46.

S609: Another cross-domain routing is established, and the routing is as follows:
N10->N11->N12->N13-> N26->N25->N24-> N44->N45->N46.

Thus, N10 has completed the establishment of 1+1 service, and the service source node completes the establishment of the separation routing connection service, i.e. the cross-domain connection routing separation between the source node and the sink node. When any of the routing connections needs to be rerouted or when the dynamic routing change occurs, the operation same as that in Step 4 is performed. When a failure occurs on one connection routing in the call in the network, because no overlapped path exists in the connection routings in the call, other routings are not influenced. Therefore, in this embodiment, the correlation of network routing failures may be reduced, and the viability of the service may be improved. Using the above embodiment of the invention, not only 1+1 service can be established, but also N (N≥2) cross-domain separation routing connections can be established.

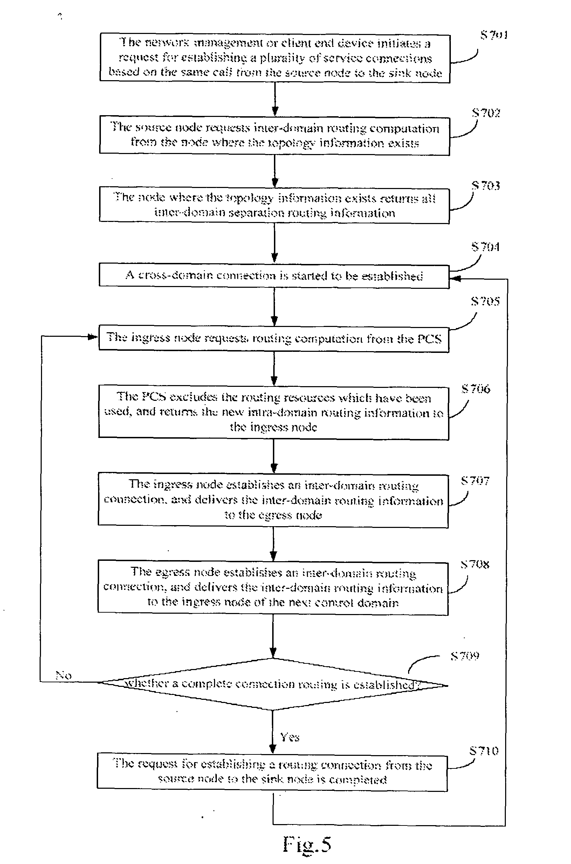

Figure 5 is a flow chart showing the process in which a cross-domain separation routing connection is established according to one embodiment of the invention.

Specifically, this embodiment includes the following steps.

S701: The network management or client end device initiates a request for establishing a plurality of service connections based on the call from the source node to the sink node.

S702: The source node requests the inter-domain routing computation from the node on where the topology information exists.

S703: The node where the topology information exists returns all inter-domain separation routing information.

S704: A cross-domain connection is started to be established.

S705: The ingress node requests the routing computation from the PCS.

S706: The PCS excludes the routing resources which have been used, and returns the new intra-domain routing information to the ingress node.

S707: The ingress node establishes an inter-domain routing connection, and delivers the inter-domain routing information to the egress node via an intra-domain routing.

S708: The egress node establishes an inter-domain routing connection, and delivers the inter-domain routing information to the ingress node of the next control domain.

S709: It is determined whether a complete connection routing is established. If the complete connection routing is established, turns to S710; otherwise, turns to S705.

S710: The request for establishing a routing connection from the source node to the sink node is completed, and returns. to S704.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A method for implementing a cross-domain routing separation, adapted to establish a connection based on a call between a source node and a sink node, **characterized in that**, comprising:
obtaining, by the source node, information of all inter-domain separation routings, an ingress Sub-Network Point Pool, SNPP, and an egress SNPP of each domain between the source node and the sink node;
requesting, by an ingress node of each domain between the source node and the sink node, a Path Computations Server, PCS, in a domain where the ingress node exists to compute intra-domain separation routings based on the call, on the ingress SNPP and on the egress SNPP, and storing information of the intra-domain separation routings;
delivering, by the ingress node, the information of all the inter-domain separation routings, the ingress SNPP and the egress SNPP between the source node and the sink node to an egress node of the domain along one of the intra-domain separation routing computed by the PCS;
delivering, by the egress node, the information of all the inter-domain separation routings, the ingress SNPP and the egress SNPP between the source node and the sink node to an ingress node along one of the inter-domain of the next domain separation routings; and
obtaining different routings between the source node and the sink node to establish the connection based on the call, according to the information of all the inter-domain separation routings and the information of the intra-domain separation routings.

2. The method according to claim 1, wherein, according to call request information, the ingress SNPP and the egress SNPP, computing, by the PCS, the intra-domain separation routings of the domain in one time.

3. The method according to claim 1, wherein, according to call request information, the ingress SNPP and the egress SNPP, computing, by the PCS, the intra-domain separation routings of the domain step by step.

4. The method according to claim 1, wherein:
the different routings between the source node and the sink node implement the cross-domain routing separation, wherein the cross-domain routing separation comprises a link separation and shared risk link group separation.

5. The method according to claim 1, wherein:
the different routings between the source node and the sink node implement the cross-domain routing separation, wherein the cross-domain routing separation comprises a node separation and shared risk link group separation.

6. The method according to claim 2 or 3, wherein, saving, by the PCS, a routing computation result and the call request information, and establishing a query index for the routing computation result according to the call request information.

7. The method according to claim 6, wherein, the call request information comprises a call ID and a connection ID.

8. The method according to claim 7, wherein, a representation of the call ID comprises a call ID object type defined by International Telecommunication Unite-T sector, ITU-T.

9. The method according to claim 7 or 8, wherein, the connection ID uniquely corresponds to the connection based on the call; and
a representation of the connection ID comprises a source transfer network address, a sink transfer network address and a connection name; or
the representation of the connection ID comprises a name of the source node, a name of the sink node and a instance number; or
the representation of the connection ID comprises a connection name.

## Patentansprüche

1. Verfahren zum Implementieren einer Cross-Domain-Routing-Separation, ausgelegt zum Herstellen einer Verbindung auf der Basis eines Anrufs zwischen einem Quellknoten und einem Senkenknoten, **dadurch gekennzeichnet, dass** es Folgendes umfasst:
Erhalten von Informationen von allen Inter-Domain-Separation-Routings durch den Quellknoten, eines Eintritts-SNPP (Sub-Network Point Pool) und eines Austritts-SNPP jeder Domäne zwischen dem Quellknoten und dem Senkenknoten;
Anfordern, durch einen Eintrittsknoten jeder Domäne zwischen dem Quellknoten und dem Senkenknoten, eines Wegberechnungsservers PCS in einer Domäne, wo der Eintrittsknoten existiert, um Intra-Domain-Separation-Routings auf der Basis des Anrufs, des Eintritts-SNPP und des Austritts-SNPP zu berechnen, und Speichern der Informationen der Intra-Domain-Separation-Routings;
Liefern der Informationen aller Inter-Domain-Separation-Routings, des Eintritts-SNPP und des Austritts-SNPP zwischen dem Quellknoten und dem Senkenknoten durch den Eintrittsknoten an einen Austrittsknoten der Domäne zusammen mit einem der durch den PCS berechneten Intra-Domain-Separation-Routings;
Liefern der Informationen aller Inter-Domain-Separation-Routings, des Eintritts-SNPP und des Austritts-SNPP zwischen dem Quellknoten und dem Senkenknoten durch den Austrittsknoten an einen Eintrittsknoten der nächsten Domäne zusammen mit einem der Inter-Domain-Separation-Routings und
Erhalten von unterschiedlichen Routings zwischen dem Quellknoten und dem Senkenknoten, um die Verbindung auf der Basis des Anrufs gemäß den Informationen aller Inter-Domain-Separation-Routings und den Informationen der Intra-Domain-Separation-Routings herzustellen.

2. Verfahren nach Anspruch 1, wobei gemäß den Anrufsanforderungsinformationen, dem Eintritts-SNPP und dem Austritts-SNPP die Intra-Domain-Separation-Routings der Domäne auf einmal durch den PCS berechnet werden.

3. Verfahren nach Anspruch 1, wobei gemäß den Anrufsanforderungsinformationen, dem Eintritts-SNPP und dem Austritts-SNPP die Intra-Domain-Separation-Routings der Domäne Schritt für Schritt durch den PCS berechnet werden.

4. Verfahren nach Anspruch 1, wobei:
die verschiedenen Routings zwischen dem Quellknoten und dem Senkenknoten die Cross-Domain-Routing-Separation implementieren, wobei die Cross-Domain-Routing-Separation eine Linkseparation und eine Shared-Risk-Link-Group-Separation umfasst.

5. Verfahren nach Anspruch 1, wobei:
die verschiedenen Routings zwischen dem Quellknoten und dem Senkenknoten die Cross-Domain-Routing-Separation implementieren, wobei die Cross-Domain-Routing-Separation eine Knotenseparation und eine Shared-Risk-Link-Group-Separation umfasst.

6. Verfahren nach Anspruch 2 oder 3, wobei ein Routingberechnungsergebnis und die Anrufsanforderungsinformationen durch den PCS gesichert werden und ein Anfrageindex für das Routingberechnungsergebnis gemäß den Anrufsanforderungsinformationen hergestellt wird.

7. Verfahren nach Anspruch 6, wobei die Anrufsanforderungsinformationen eine Anrufs-ID und eine Verbindungs-ID umfassen.

8. Verfahren nach Anspruch 7, wobei eine Darstellung der Anrufs-ID einen durch die internationale Fernmeldeunion Bereich T (ITU-T) definierten Anruf-ID-Objekttyp umfasst.

9. Verfahren nach Anspruch 7 oder 8, wobei die Verbindungs-ID eindeutig der auf dem Anruf basierenden Verbindung entspricht und
eine Darstellung der Verbindungs-ID eine Quelltransfernetzadresse, eine Senkentransfernetzadresse und einen Verbindungsnamen umfasst oder
die Darstellung der Verbindungs-ID einen Namen des Quellknotens, einen Namen des Senkenknotens und eine Instanznummer umfasst oder
die Darstellung der Verbindungs-ID einen Verbindungsnamen umfasst.

## Revendications

1. Procédé permettant de mettre en oeuvre une séparation d'acheminements inter domaines, conçue pour établir une connexion sur la base d'un appel entre un noeud source et un noeud récepteur, **caractérisé en ce qu'**il comprend :
la récupération, grâce au noeud source, d'informations de la totalité des acheminements de séparation inter domaines, d'un regroupement de points de sous réseaux, SNPP, d'entrée et d'un regroupement SNPP de sortie de chaque domaine compris entre le noeud source et le noeud récepteur,
la demande, par un noeud d'entrée de chaque domaine compris entre le noeud source et le noeud récepteur, d'un serveur de calculs de trajets, PCS, dans un domaine où se trouve le noeud d'entrée afin de calculer des acheminements de séparation intra domaine fondés sur l'appel, sur le regroupement SNPP d'entrée et sur le regroupement SNPP de sortie, ainsi que la mémorisation des informations des acheminements de séparation intra domaine,
la fourniture, grâce au noeud d'entrée, des informations de la totalité des acheminements de séparation inter domaines, du regroupement SNPP d'entrée et du regroupement SNPP de sortie entre le noeud source et le noeud récepteur vers un noeud de sortie du domaine le long de l'un des acheminements de séparation intra domaine calculés par le serveur PCS,
la fourniture, grâce au noeud de sortie, des informations de la totalité des acheminements de séparation inter domaines, du regroupement SNPP d'entrée et du regroupement SNPP de sortie entre le noeud source et le noeud récepteur vers un noeud d'entrée du domaine suivant le long de l'un des acheminements de séparation inter domaines, et
la récupération des différents acheminements entre le noeud source et le noeud récepteur afin d'établir la connexion sur la base de l'appel, en fonction des informations de la totalité des acheminements de séparation inter domaines et des informations des acheminements de séparation intra domaine.

2. Procédé selon la revendication 1, dans lequel, conformément aux informations de la demande d'appel, au regroupement SNPP d'entrée et au regroupement SNPP de sortie, il est effectué en une seule fois un calcul par le serveur PCS des acheminements de séparation intra domaine du domaine.

3. Procédé selon la revendication 1, dans lequel, conformément aux informations de la demande d'appel, au regroupement SNPP d'entrée et au regroupement SNPP de sortie, il est effectué étape par étape un calcul par le serveur PCS des acheminements de séparation intra domaine du domaine.

4. Procédé selon la revendication 1, dans lequel :
les différents acheminements entre le noeud source et le noeud récepteur mettent en oeuvre la séparation des acheminements inter domaines, dans lequel la séparation des acheminements inter domaines comprend une séparation de liaison et une séparation de groupes de liaisons à risques partagés.

5. Procédé selon la revendication 1, dans lequel :
les différents acheminements entre le noeud source et le noeud récepteur mettent en oeuvre la séparation des acheminements inter domaines, dans lequel la séparation des acheminements inter domaines comprend une séparation de noeuds et une séparation de groupes de liaisons à risques partagés.

6. Procédé selon la revendication 2 ou 3, dans lequel il est effectué, par le serveur PCS, la mémorisation d'un résultat de calcul d'acheminements et des informations de demande de l'appel, ainsi que l'établissement d'un index de consultations pour le résultat de calcul d'acheminements en fonction des informations de demande de l'appel.

7. Procédé selon la revendication 6, dans lequel les informations de demande de l'appel comprennent un identificateur ID d'appel et un identificateur ID de connexion.

8. Procédé selon la revendication 7, dans lequel une représentation de l'identificateur ID d'appel comprend un type d'objet identificateur ID d'appel défini par l'Union Internationale des Télécommunications - secteur T, l'UIT-T.

9. Procédé selon la revendication 7 ou 8, dans lequel l'identificateur ID de connexion correspond de manière unique à la connexion sur la base de l'appel, et
une représentation de l'identificateur ID de connexion comprend une adresse de réseau de transfert source, une adresse de réseau de transfert récepteur et un nom de connexion, ou
la représentation de l'identificateur ID de connexion comprend un nom du noeud source, un nom du noeud récepteur et un numéro d'instance, ou
la représentation de l'identificateur ID de connexion comprend un nom de connexion.
